# EUROPEAN PATENT SPECIFICATION

(11) **EP 1 325 627 B1**
(45) Date of publication and mention of the grant of the patent: **19.04.2006**
(21) Application number: 01977650.9
(22) Date of filing: 09.10.2001
(51) Int. Cl.: H04N 5/44

(54) **SYSTEMS AND METHODS FOR BUILDING USER MEDIA LISTS**
VERFAHREN UND SYSTEME ZUM AUFBAU VON BENUTZERMEDIALISTEN
SYSTEMES ET PROCEDES D'ELABORATION DE LISTES DE MEDIAS D'UTILISATEUR

(30) Priority: 11.10.2000 US 239523 P
(43) Date of publication of application: 09.07.2003
(73) Proprietor: United Video Properties, Inc., Tulsa, OK 74136 (US)
(72) Inventor: ELLIS, Michael, D., Boulder, CO 80304 (US); WALKER, Todd, A., Bixby, OK 74008 (US)
(74) Representative: Hibbert, Juliet Jane Grace
(86) International application number: PCT/US2001/031584
(87) International publication number: WO 2002/032120

(56) References cited:
- WO-A-00/38428
- WO-A-01/15438
- WO-A-99/04561

## Description

### Background of the Invention

This invention relates to systems and methods for allowing users of media to build lists of desired media.

Users of televison programming video-on-demand programming, pay-per-view programming, Internet web sites and other systems are exposed to a wide variety of promotions, advertisements (including banner type advertisements), trailers, products, or other on-screen content or on-screen features for promoting, marketing, or describing programming, Internet Web sites, channels, or otherwise indicating media for user access. While watching television, users may, for example, see commercials or other promotions for media on a regular television channel, on a passive guide television channel, on a barker channel, on an interactive program guide display (or other interactive television application display), on an Internet Web site, or on other types of visual display. Typically, while surfing Internet Web sites, users may see advertisements for other Web sites and other Web content. Additionally, users may obtain information about products that may be shown as part of the normal course of action in movies, television shows or programming.

In known conventional systems, it is difficult for users to later find and access such promotional materials subsequent to the original presentation of the promotional material. For example, a user who is in the midst of searching for a particular channel may notice an advertisement for a movie that the user may wish to purchase on a pay-per-view channel at a future time. To access information on the pay-per-vieru movie, the user may need to abandon the current search for the channel which may cause the user to lose track of the progress in the search. Thus, branching to different advertisements or promotions in such known systems may typically result in a number of different branches being pursued that are never successfully completed.

Moreover, known conventional systems have been deficient in providing users with a system for building a media list in which users are provided with a method to store a list of opportunities of interest, and to view the information related to the opportunities at a later time.

### Summary of the Invention

In accordance with the embodiments of the present invention, media list building systems and methods may be provided in which media may be tagged, listed and subsequently accessed.

According to a first aspect of the present invention, there is provided an apparatus comprising user equipment, the apparatus further comprising means to display one of a number of videos on a display device wherein at least one of the videos includes a scene in which a product is shown that is associated with a particular user-accessible media for that product; the apparatus characterised by means to provide a user, upon display of the videos, with an opportunity to designate the addition of associated media indicator data to a user built media list means to store media indicator data associated with the user accessible media; means to present the user built media list to the user on the display device for selection at a later time upon user invocation; and means to retrieve the user accessible media for an item in the user built media list, utilising media indicator data, upon user selection from the user built media list.

According to a second aspect of the present invention, there is provided a method of operating user equipment, said method comprising displaying one of a number of videos on a display device wherein at least one of the videos includes a scene in which a product is shown that is associated with a particular user-accessible media for that product; the method characterised by providing a user, upon display of the videos, with an opportunity to designate the addition of associated media indicator data to a user built media list; storing media indicator data associated with the user accessible media; presenting the user built media list to the user on the display device for selection at a later time upon user invocation; and retrieving the user accessible media for an item in the user built media list, utilising media indicator data, upon user selection from the user built media list.

According to a third aspect of the present invention, there is provided computer readable storage media comprising instructions for displaying one of a number of videos on a display device wherein at least one of the videos includes a scene in which a product is shown that is associated with a particular user-accessible media for that product; the computer readable storage media characterised by instructions for providing a user, upon display of the videos, with an opportunity to designate the addition of associated media indicator data to a user built media list; instructions for storing media indicator data associated with the user accessible media; instructions for presenting the user built media list to the user on the display device for selection at a later time upon user invocation; and instructions for retrieving the user accessible media for an item in the user built media list, utilising media indicator data, upon user selection from the user built media list.

These systems and methods may provide media list building capabilities. Media indicators may be presented to users to promote particular media to users. Media indicators may be advertisements (including metatag-linked type advertisements), promotions, commercials, programming embedded merchandise, trailers, on-screen features of applications, etc. Media indicators may promote a variety of media including television programming, video-on-demand programming, pay-per-view programming, Web sites, and other types of media. Users may tag the media associated with media indicators for inclusion in a media list.

Tagging may be accomplished by a user input device such as a remote control. Association of the media with the media indicator may be based on data in the vertical blanking interval, in the in-band data stream, by indicators within Web applications, or by other methods. For instance, the association may also be based on schedule information provided from an electronic program guide. In this instance, when a user tags a media indicator, the program guide may determine the specific media association based on, for example, the current time and current channel. Additionally, metatag linking may be used for media indicator association.

Tagging of media may occur without interruption of current display activity. There may be an indication that the media has been tagged.

A user may later access a list of tagged media and subsequently make selections from the list for viewing. Targeted advertisements promoting media in the same category as media on the list or in a related category may be provided. In one embodiment, a preview or trailer that is associated with the media may be stored and optionally accessed at a later time. In another embodiment, the system may support lists for multiple users.

In yet another embodiment, when the user selects a media listing, the system may determine the availability of the media. If the media is unavailable, the system may provide a user with an indication of the unavailability of the media and provide the user with an opportunity to keep that media on the list. When the media later becomes available, the user may be notified of the availability for subsequent access. If available, the user may be provided with an opportunity to watch, record, set a reminder, or take other action related to the media.

### Brief Description of the Drawings

The principles and advantages of the invention will become apparent upon reading the following detailed description and upon reference to the drawings in which:
FIG. 1 is a block diagram illustrating an embodiment of a user media list building system in accordance with the present invention;
FIG. 2 is an illustrative flow chart for an embodiment of the user media list building system in accordance with the present invention;
FIG. 3a is a representation of a display illustration of a typical Web page advertisement superimposed on a Web page that may be provided to users in accordance with the present invention;
FIG. 3b is a representation of a display illustration of a typical pay-per-view related region superimposed over a cable television signal that may be provided to users in accordance with the present invention;
FIG. 3c is a representation of a display illustration of a promotional video clip that may be provided to users in accordance with the present invention;
FIG. 3d is a representation of a display illustration of a guidance application menu that may be provided to users in accordance with the present invention;
FIG. 4 is a representation of a display illustration of a display involved in requesting the addition of media to a media list in accordance with the present invention;
FIG. 5 is a representation of a display illustration of a setup choice menu that may be provided to users in accordance with the present invention;
FIG. 6 is a representation of a display illustration of a user profile choice menu that may be provided to users in accordance with the present invention;
FIG. 7 is a representation of a display illustration of a user choice selection menu that may be provided to users in accordance with the present invention;
FIG. 8 is a representation of a display illustration for requesting media addition for a selected user in accordance with the present invention;
FIG. 9 is a representation of a display illustration of a media list user choice menu that may be provided to users in accordance with the present invention;
FIG. 10 is a representation of a display illustration of a media list with preview option that may be provided to users in accordance with the present invention;
FIG. 11 is a representation of a display illustration of a pay-per-view choice menu that may be provided to users in accordance with the present invention;
FIG. 12 is a representation of a display illustration of a notification of media unavailability that may be provided to users in accordance with the present invention;
FIG. 13 is a representation of a display illustration of a notice of media availability that may be provided to users in accordance with the present invention;
FIG. 14 is a representation of a display illustration of a television screen with embedded product information that may be provided to users in accordance with the present invention; and
FIG. 15 is a representation of a display illustration of a display screen that may be provided in accordance with the present invention.

While the invention will be described in connection with a preferred embodiment, it will be understood that it is not intended to limit the invention to that embodiment. On the contrary, it is intended to cover all alternatives, modifications and equivalents as may be included within the scope of the invention as defined by the appended claims.

### Detailed Description

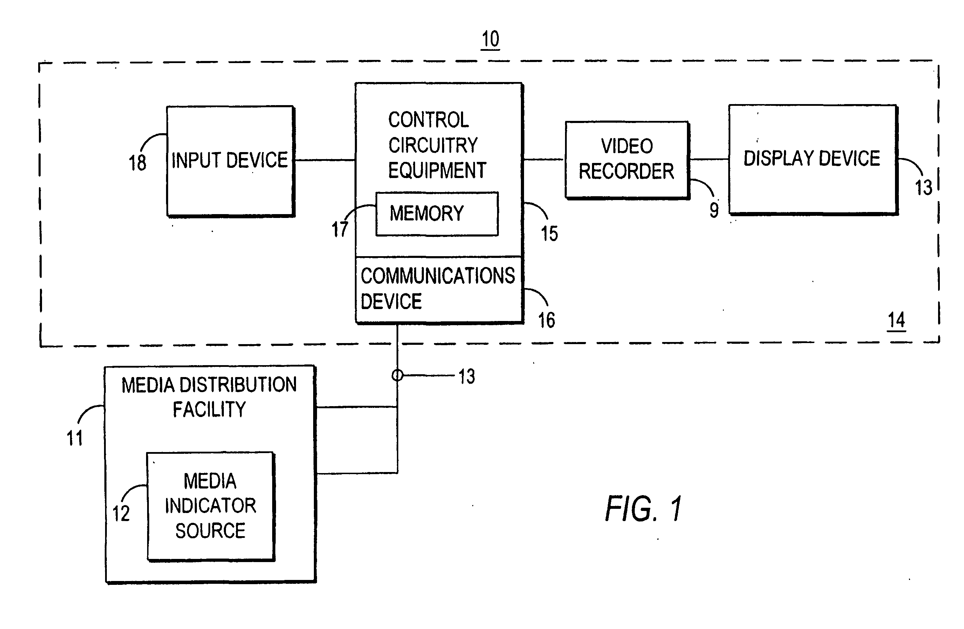

A system such as illustrative system 10 of FIG. 1 may be provided for building, presenting, and accessing media lists. With reference now to FIG. 1, system 10 may include a media distribution facility 11 that provides media indicators, which can include program listings, promotions, advertisements (including banner type), trailers, and other marketing materials from media indicator source 12. The media distribution facility 11 may also provide media indicator data. There may be multiple media distribution facilities 11 and multiple media indicator sources 12, but only a single one of each is shown to avoid over-complicating the drawings.

Communications link 13 may be provided between media distribution facility 11 and user equipment 14. Communications link 13 may, for example, be a satellite link, a telephone network link, a cable or fiber optic link, a microwave link, a radio frequency link, an Internet link, a data-over-cable service interface specification link, a combination of such links, or any other suitable communications link. Communications link 13 may carry digital communications, analog communications, or combinations thereof. Video and data signals may be transmitted over link 13. Media distribution facility 11 or media indicator source 12 may include, for example, suitable transmission equipment for distributing media indicator data that identifies the media associated with a media indicator. In one approach, media indicators and/or media indicator data may be distributed in the vertical blinking interval of television signals. In another approach, media indicators and/or media indicator data may be provided in an in-band data stream associated with a digital channel.

In still another suitable approach, the indicators and/or indicator data may be determined based on a programming schedule. Schedule information may be provided from an electronic program guide. When a user tags a media indicator, the media associated with the tagged media indicator may be determined based on schedule information (e.g., the time and the channel to which the user is tuned). For media indicators and data within software applications, such as the Internet applications, the application may associate screen elements with media using, for example, media identifiers.

Media indicator data from the media distribution facility 11 may be received by control circuitry equipment 15 of user equipment 14. The functions of control circuitry equipment 15 may be provided by a set-top box, a personal computer, or other equipment. If desired, a combination of such equipment may be used.

User equipment 14 may include communications device 16 for supporting communications between media distribution facility 11, media indicator source 12, and user equipment 14. Communications device 16 may be a modem (e.g., any suitable analog or digital standard, cellular or cable modem), a network interface card (e.g., an Ethernet Card, token ring card, etc.), or other suitable communications device.

The user equipment 14 may also include memory 17. Memory 17 may be any electronic memory or other storage device, such as random access memory (RAM), flash memory, a hard disk drive, or combination of such devices, etc., that is suitable for storing media list building application instructions and media list data.

User equipment 14 may include video recorder 9 which may be a video cassette recorder, a digital video recorder, a personal video recorder such as TiVo, or other suitable recorder.

A user interacts with user equipment 14 through input device 18. The input device 18 may be a pointing device, a wireless remote control, a keyboard, a touch-pad, a voice recognition system, or any other suitable user input device. To access the functions of the media list building system, input device 18 may be used to instruct the system to generate media list menus for display on display device 19.

Computer acceptable instructions for providing media list building and generating functionality may be implemented in various ways. Media list building application instructions or updates to those instructions may be transmitted over communications link 13 for storage in memory 17 for use by control circuitry equipment 15. If desired, media list application instructions may be installed in control circuitry equipment 15 at the time of equipment manufacture or upon initial setup. Other ways of loading such instructions may also be used. Such functionality as described herein may be implemented as part of or separate from an interactive television program guide application. Such instructions and/or functionality may be implemented on control circuitry equipment 15, on media distribution facility 11, or implemented using both control circuitry equipment 15 and media distribution facility 11 or equipment in other locations.

Display device 19 may be operably coupled to control circuitry equipment 15. Display device 19 may be a television set, a monitor, or other display device that is capable of presenting audiovisuals received from control circuitry equipment 15. Media distribution facility 11 may be a television distribution facility (e.g., a headend, a television broadcast station, etc.), a distribution facility for providing Internet content, etc. Media distribution facility 11 may include a server for presenting media and/or media indicators.

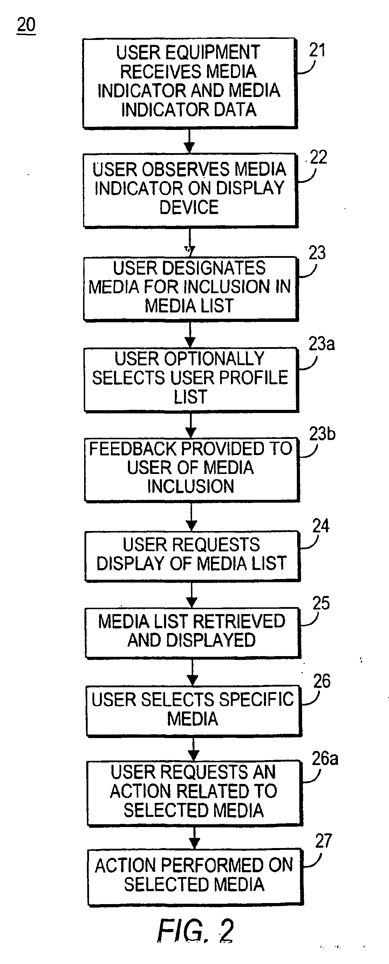

FIG. 2 depicts one embodiment of an illustrative process 20 for building and using media lists. FIG. 2 depicts an illustrative flow chart which represents at a functional level a control program executable through hardware and/or software of control circuitry equipment 15 (FIG. 1) (possibly in combination with other circuitry, for example, the media distribution facility 11). The process may include receiving a media indicator (step 21), presenting the media indicator to be observed by a user (step 22), designating media for inclusion in a list (step 23), optionally allowing the user to select a user profile list (step 23a), providing feedback to the user of media inclusion (step 23b), allowing a user to request the display of a media list (step 24), retrieving and displaying the list (step 25), allowing the user to select particular media from the list (step 26), and performing an action related to the media (step 27).

The control program of control circuitry equipment 15 (FIG. 1) may allow a media indicator to be received at step 21, which is presented to a user on a display device 19 (FIG. 1) at step 22. The control program then allows the user to designate the media associated with the media indicator for inclusion in a media list at step 23. Designation may be made using a user input device. At step 23a a user may optionally select the media addition to be to a specific profile list of a particular user. If desired, at step 23b, feedback to the user would be provided confirming the addition of the media to the list.

At step 24, the control program may be used by the user to request the display of the media list. The request may be made using a user input device. The control program may then display the media list at step 25 and the user may select media from the list using an input device at step 26. At step 26a, the control program may be used by the user to indicate an action related to the media. The selected action (such as displaying the media), may be performed at step 27.

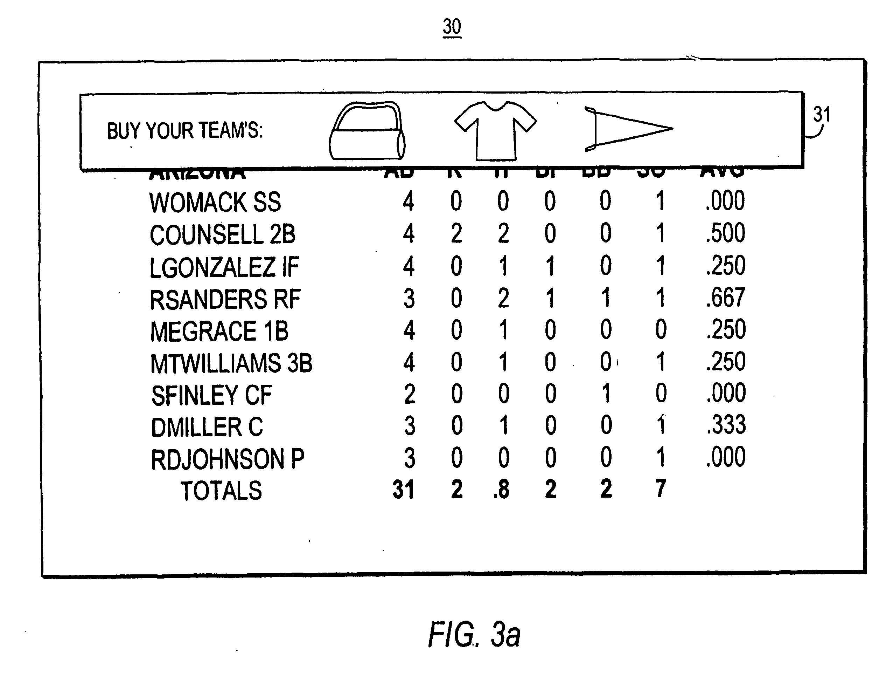

The media list building system, may, for example, provide an opportunity for users to tag media associated with a variety of media indicators such as promotions, advertisements (including banner type advertisements), and trailers. Promotions for media can include, for example, regular television commercials, Internet Web page advertisements, passive guide channel listings, barker channels, advertisements displayed in interactive program guides, advertisements displayed in other interactive television applications, listings displayed in program guides, etc. Advertisements for Internet sites, advertisements for products, or advertisements for other media on Internet Web sites are additional examples. Illustrative examples of media indicators are shown in FIGS. 3a-3d.

FIG. 3a illustrates an example of an Internet Web page 30 that includes advertising banner 31 as a media indicator that may be "clicked" for access to specific media, e.g., an Internet site. When a user observes this media indicator, a user may designate media associated with media indicator 31, (e.g., designate an Internet site associated with a banner advertisement for that site), for inclusion in a media list. This selection may be performed for instance by highlighting an item then pressing a key on an input device 18 (FIG. 1). Metatags associated with advertisement may identify the related media, may identify the source or the location of the related media, or may identify characteristics of the media or the advertisements.

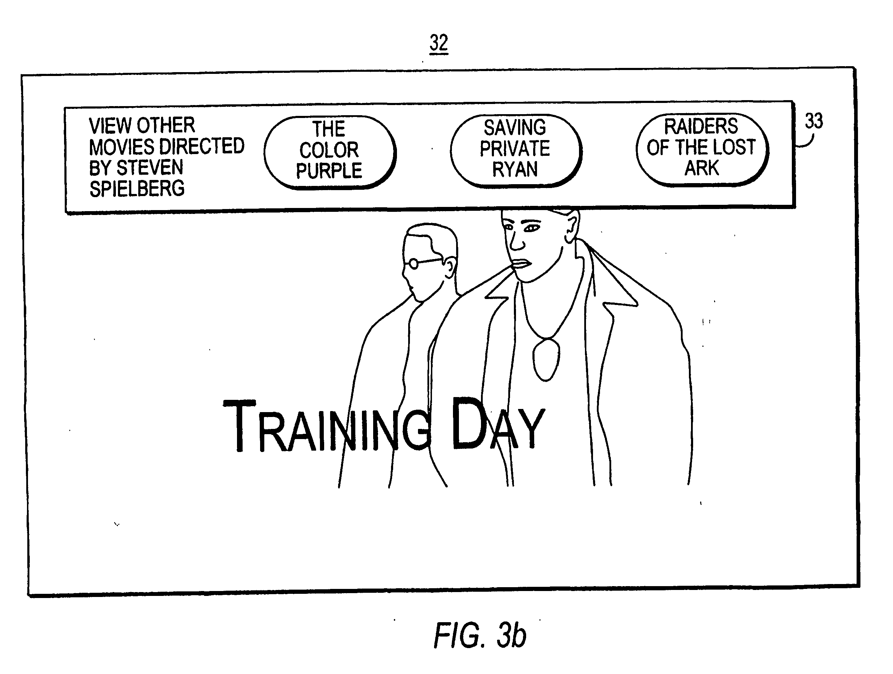

FIG. 3b illustrates an example of a television display screen 32 in which region 33 contains a media indicator for programs related to a currently displayed program. Region 33 may be displayed using program listings that are available to an interactive television application. In this illustration, the media indicator presents pay-per-view movies that may be available for purchase. When this media indicator is presented, the user may designate the media for inclusion in a media list, for example, by pressing a key on an input device 18 (FIG. 1).

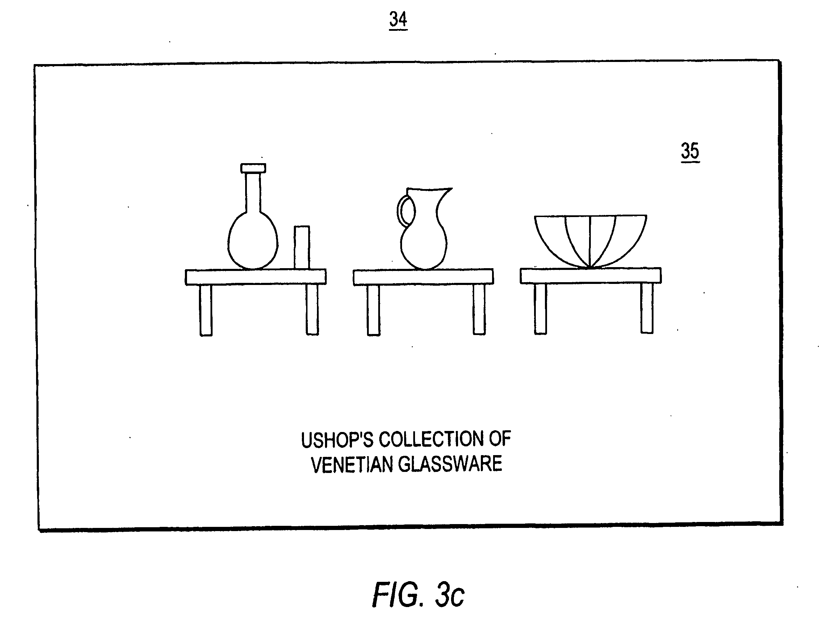

FIG. 3c illustrates, for example, display screen 34 that may include video of a shopping channel, in which media indicators for video clips 35 may be designated to be added to a media list. In this example, a designation may be made even though there is no on-screen indication to the user that the media may be tagged. When a user observes video clips 35, the user may designate the video clips for inclusion in a media list, for example, by pressing a key on an input device 18 (FIG. 1).

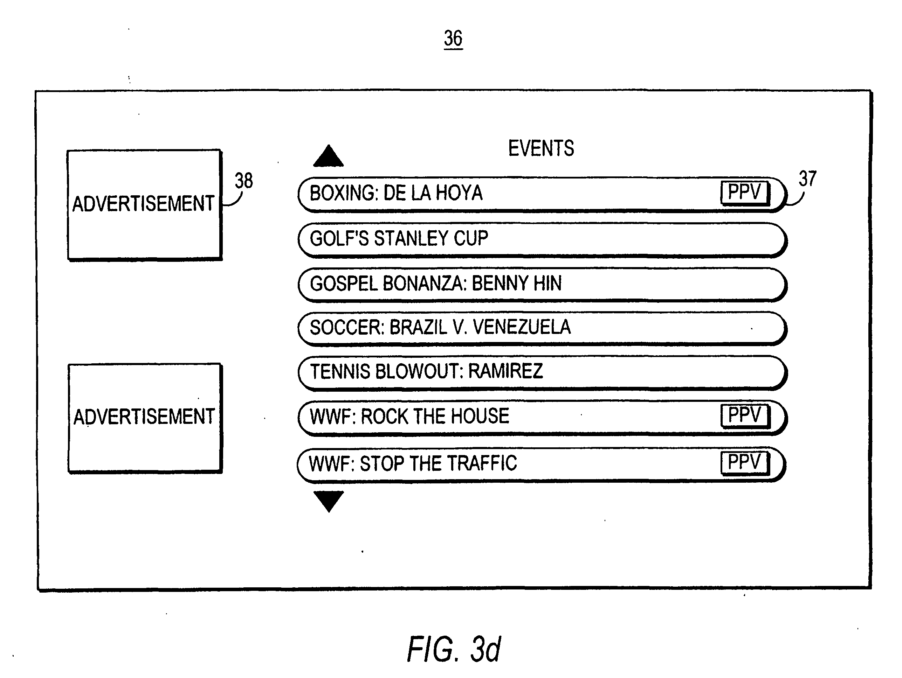

Other types of media indicators may be provided in interactive applications such as in program guides. As depicted in FIG. 3d, a program guide menu display screen 36 may contain general media listings as well as offerings for purchase such as boxing match listing 37, which is designated as "PPV" (pay-per-view), and an interactive advertisement 38. When a user observes these media indicators (the program listings or advertisement), the user may designate the media associated with listing 37 or media associated with advertisement 38 for inclusion in a media list. Designation may be made, for example, by pressing a key on an input device 18 (FIG. 1).

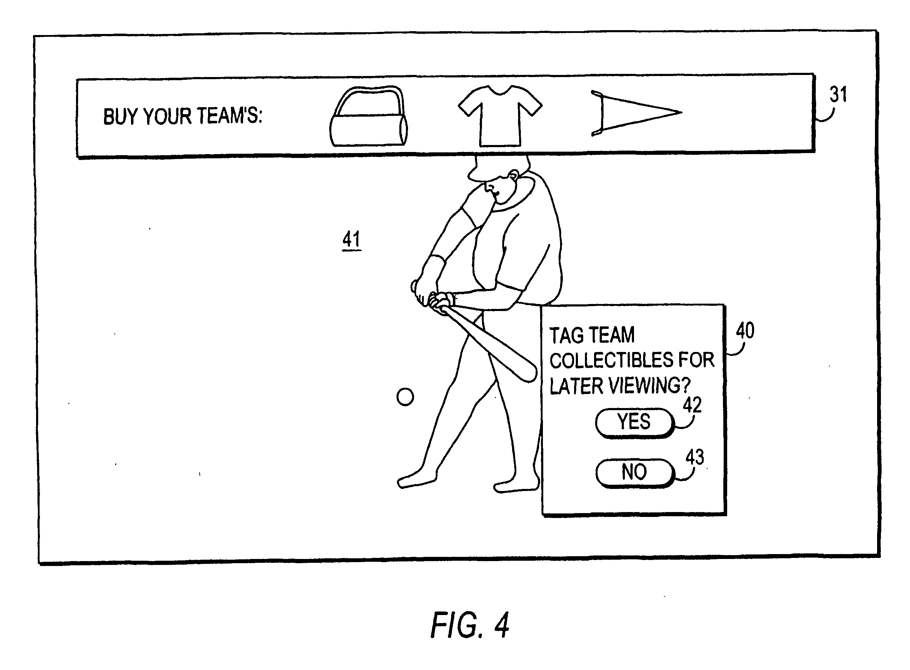

FIG. 4 illustrates choice menu 40 that is displayed in response to a user input (e.g., a key entry on using user input device 18 of FIG. 1) requesting the addition of media to a media list. Media choice menu 40 may include an icon or textual information or combination of an icon and textual information that is superimposed over video 41 of television programming. This feature allows users to keep track of media found desirable while watching -television or while interacting with an application without having to stop their current activity. The user may then make a choice using, for example, navigation keys of a remote control to toggle between the "YES" 42 and "NO" 43 options and using an entry function on the remote control to make a selection. When a "YES" selection is made, the media is added to the media list. Sufficient information to allow user equipment to access the media may be stored when that media is added to the media list. The media and the media indicator may not be stored, rather information regarding the content, the source, the address, and other information related to the media may be stored. The information may be stored to identify the location of the media at a later time and to provide some content information that may be presented to a user in a media list or in an information display screen. This information may be stored at user equipment memory 17 (FIG. 1) or at a remote location such as the server at the media distribution facility 11 (FIG. 1).

Tagging of media for inclusion in a media list demonstrates a user's interest in specific media. Advertisements may be presented to users based on their media list selections since the tagging of media exhibits user interest in particular categories of media. For instance, if a user designates automobile-related media for inclusion in the media list, automobiles may be added to the categories of interest for that user. Automobile-related advertisements may then be presented to match that user's interest in automobiles.

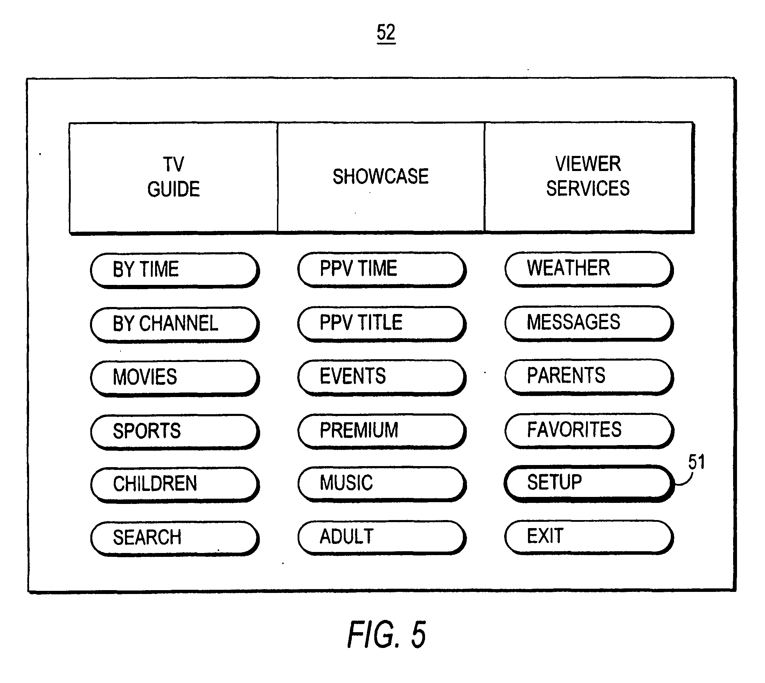

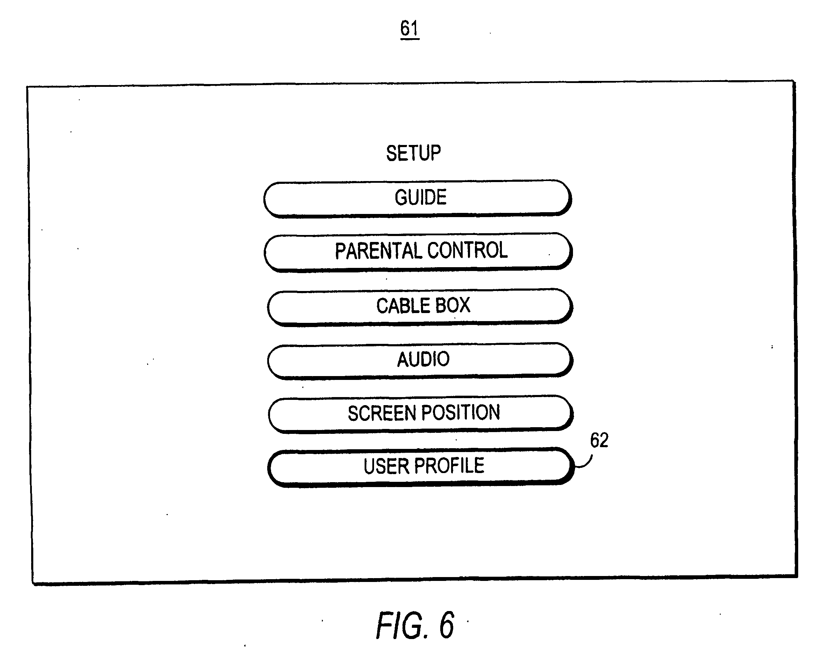

If desired, the media list building system may support lists for multiple users. As shown in FIG. 5, for example, a user may select set-up option 51 from guidance system menu display screen 52 using input device 18 (FIG. 1). Guidance system set-up menu 61 of FIG. 6 may be displayed when a user selects set-up option 51 of FIG. 5. With reference now to FIG. 6, "USER PROFILE" option 62 may be selected to allow designation to be made by different users. Different users may build their own media lists when user profile option 62 is selected. Users may add to their media lists by initially logging in or by using some other user identification technique.

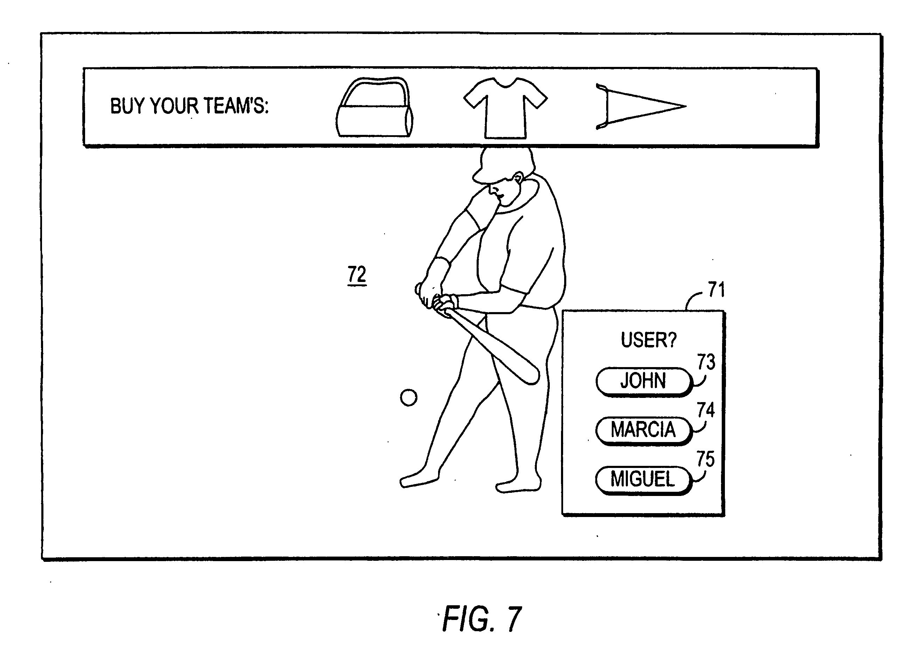

As shown in FIG. 7, access to a specific user list (i.e., access to a user media list, access to add an entry to this list) may be requested using list indicator region 71. The list indicator region 71 may be superimposed over region 72 of a video of a baseball game. The user may select a particular user using input device 18 (FIG. 1) (e.g., by using remote control navigation keys to select "JOHN" 73, "MARCIA" 74, or "MIGUEL" 75). Access to user lists may be restricted by the use of passwords or other security measures.

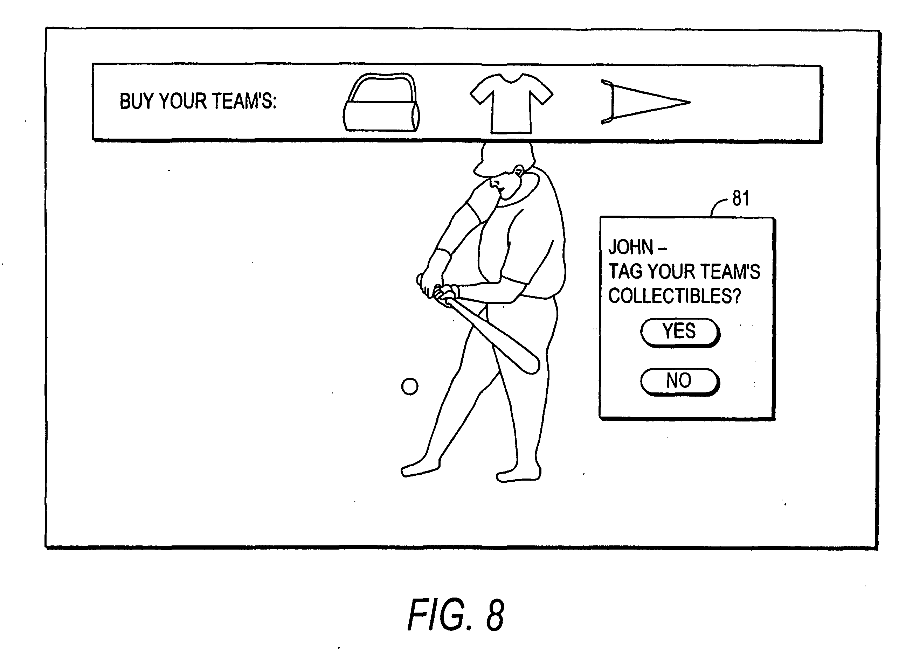

As shown in FIG. 8, when one of the users in region 71 of FIG. 7 is selected, menu region 81 may appear for adding an entry to that user's media list. See also FIG. 4 regarding regions such as region 81.

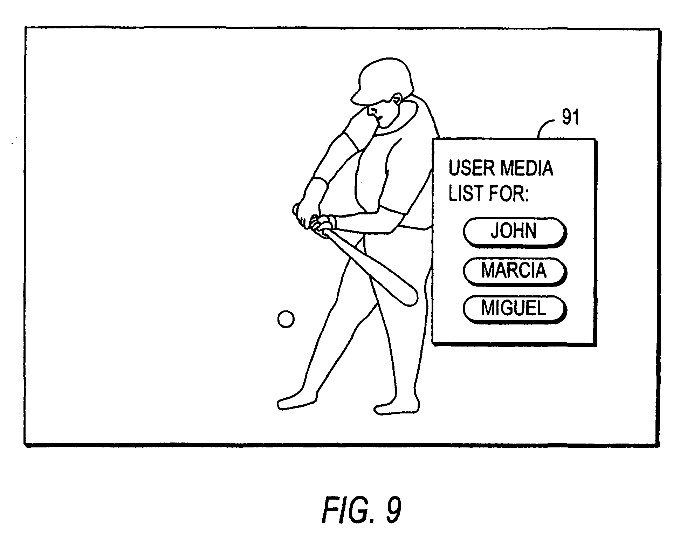

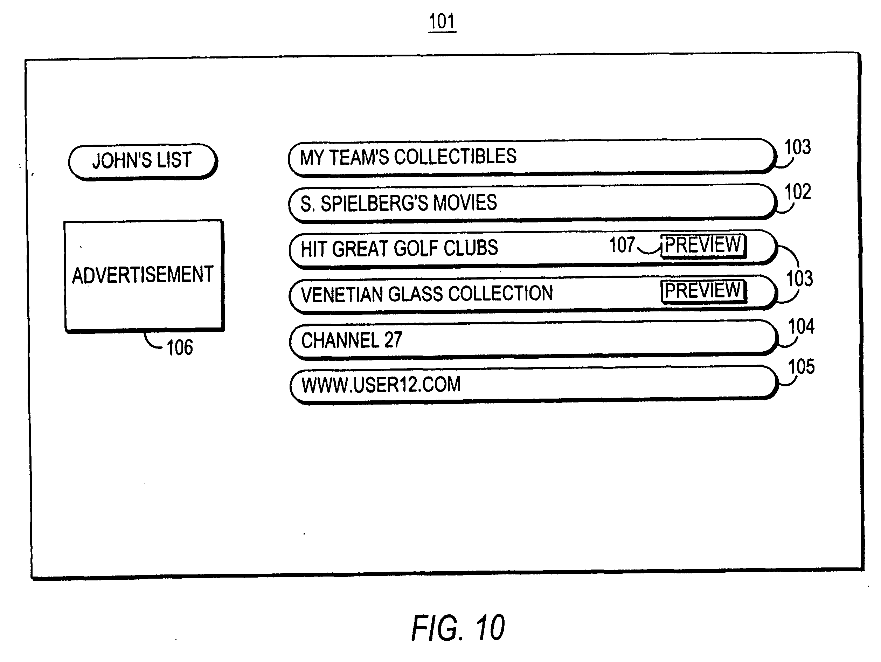

To view a media list for a particular user, user media indicator lists region 91 of FIG. 9 may be displayed in response to a user selection (e.g., using a user input device) indicating on interest in viewing a media list. In response to a user being selected from the list, a media list such as that shown in FIG. 10 may be displayed.

As shown in FIG. 10, media list 101 may include a variety of listings such as listings for pay-per-view channels or programs 102, premium channels or programs 103, broadcast television channels or programs 104, Internet Web sites 105, or video-on-demand selections. The screen may also include one or more advertisements 106, which may be interactive and which may be targeted based on media selections or other criteria. A user may select listings in media list 101 by, for example, using navigation methods to select other listings. If a preview or a trailer for certain media in the media list is available, such availability may be indicated by preview icon 107. The preview or trailer may be selected by, for example, using navigation methods to move among the listings and using an entry function on the input device 18 (FIG. 1) to make a selection.

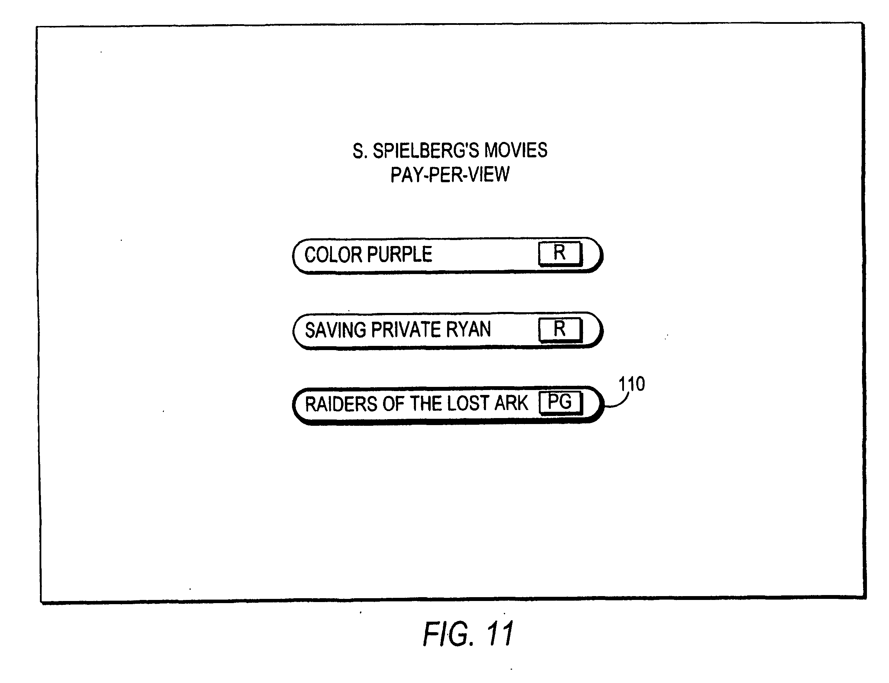

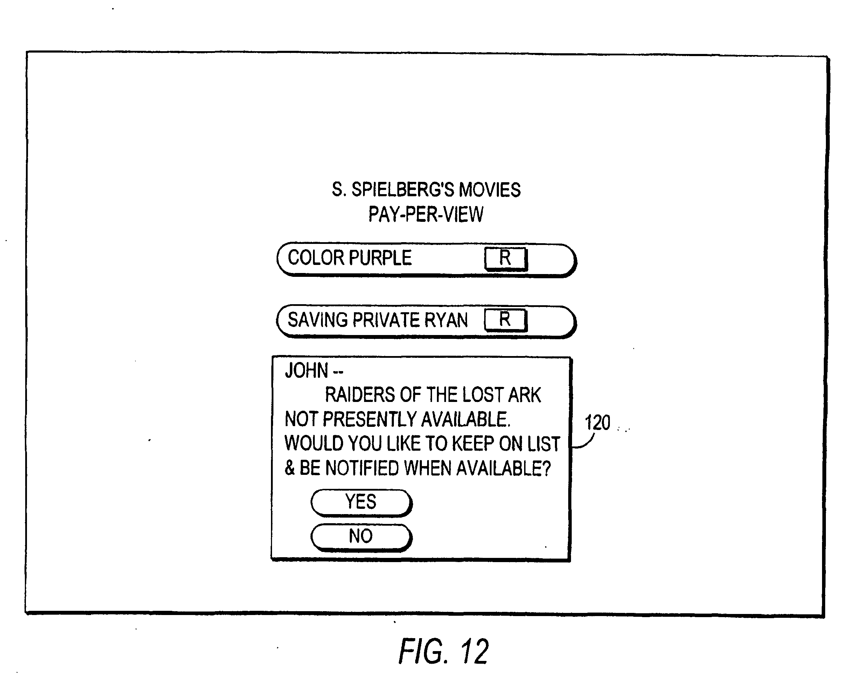

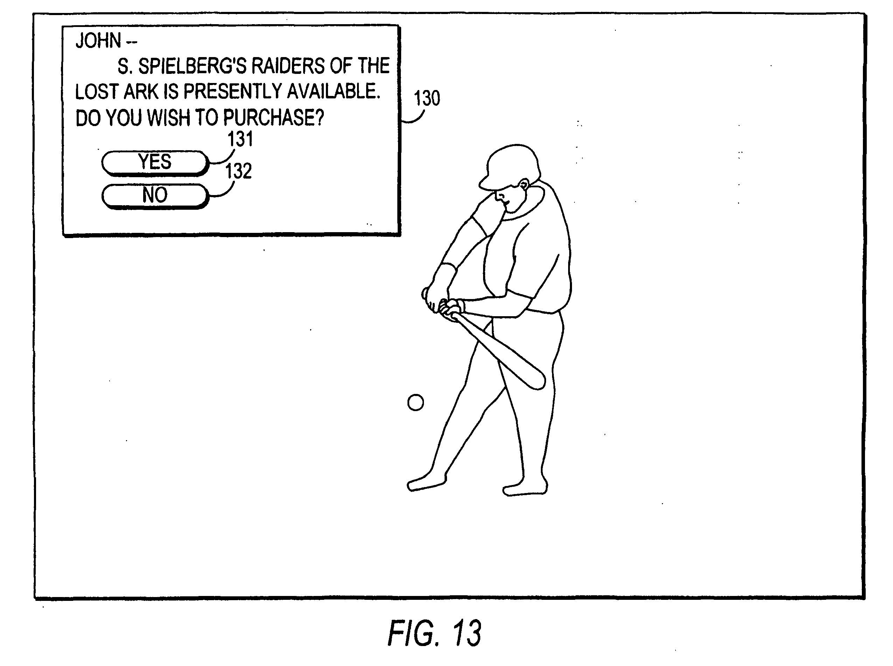

If desired, the system may determine whether the media in a media list is currently available. As illustrated in FIG. 11, the system may check for availability when "Raiders of the Lost Ark" 110 is selected. As shown in FIG. 12, if the Raiders of the Lost Ark selection is not available for access, region 120 may be displayed to inform the user of the lack of availability. The system may also provide the user with an opportunity to retain media on the media list that is not currently available and may notify the user when that media is available. The system may register the media with, for example, a process running on a video-on-demand server, or another server in the system (e.g., a video-on-demand server at a media distribution facility) or with a program guide database stored locally or remotely. When the media becomes available, the system may notify the user of the availability using notification indicator 130 of FIG. 13, which may provide the user with an opportunity to access the media for viewing. Indicator 130 is shown as a display region, but may have other forms (e.g., an icon).

Notifications may also be presented for media that is similar or related to items that are on the media list. For example, notification indicator 130 for the Raiders of the Lost Ark may have been displayed in response the system identifying that a current media list includes a listing for another Indiana Jones movie or other movies that are similar or related to the Raiders of the Lost Ark. Media on a media list may have attributes associated with them that may be used to identify related or similar media for notification to the user. Attributes may include characteristics such as actors, genre, media sources, type of product, ratings, content type, etc.

In another embodiment, viewers may view a television or computer screen, for instance, which has embedded product information. The association of product information with the display may be accomplished by using enhanced datasets such as metadata links sometimes known as metatags. A system for a metatag-linked advertisements is described, for example, in Moore et al U.S. Patent Application 2001-0047298.

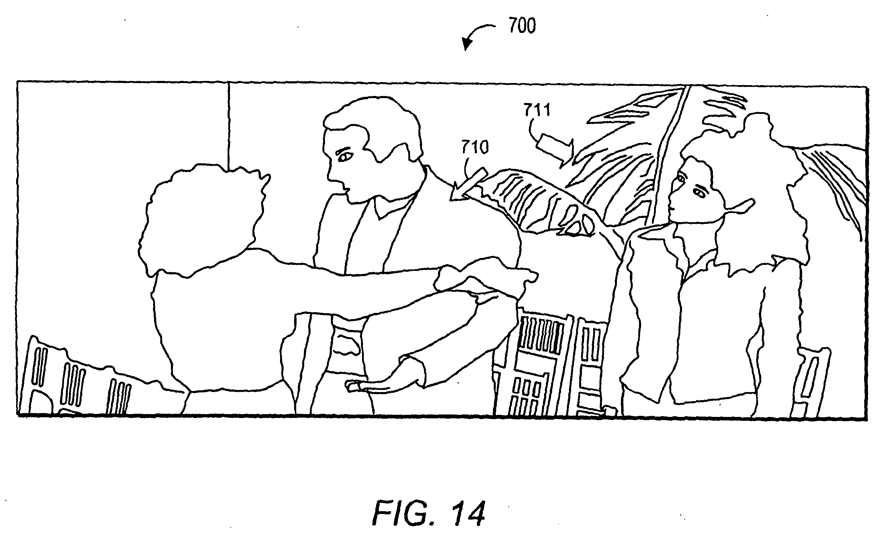

Turning to FIG. 14, screen 700 may be used to tag purchasing opportunities of interest to the user. Screen 700 may contain screen elements of interest, such as man's jacket 710, or potted plant 711, that are linked to purchasing order options that are associated with them. If desired, screen elements that are likely to be of interest to a particular user may be identified using preferences stored in a user profile. The user profile may include a listing of categories of interest for individual users. There may be one user profile for each individual user. Examples of systems that have preference profile features are known to the Applicants.

An individual could have "men's clothing" included as a category of interest in their user profile. The user profile may be configured by the user by specifying preferences or may be automatically configured based on usage or previous purchasing preferences.

If a user who is viewing screen 700 wishes to tag purchasing opportunities of interest, that is, those items that are associated with categories in his personal user profile, the user may perform tagging as previously described to add items to the media list. For example, if screen 700 is selected by the user for media list tagging (e.g., user presses a remote control key while watching the video in screen 700), the purchasing screen for purchasing jacket 710 or promotional media for jacket 710 may be added to the media list of that user. If multiple items on the screen are available for tagging, the user may indicate a particular one of the items using an input device 18 (FIG. 1) for tagging the item of interest. Alternatively, the user may select a tagging function and be presented with a list of items to select from. The purchasing screen or media for jacket 710 may be added when a category for men's clothing is included in that user's profile. Upon subsequent access to the media list by a user, the user could then select the listing for the jacket and may access the media associated with the jacket or access a purchase screen containing detailed information on the jacket.

As mentioned generally in connection with FIG. 14, video that is presented to users may include scenes in which products are shown to users as part of the action of the video. Specific media may be associated with such products, which may be accessible to users through user equipment. The media may be a Web site, a video promotion, an advertisement, etc. Information about the association of the product and the media may be available to user equipment when the video that includes the scene with that product is presented to the user. The user equipment may be configured to allow the user to indicate an interest in elements displayed in the video by using a pointing device and a data entry key (e.g., an OK or mouse "click" key).

The media associated with a product may be added to a media list when the user expresses an interest in the product and when there is media that is associated with the product. A user may express an interest in a product by for example tagging a media indicator, tagging a screen (e.g., screen 700 of FIG. 14), tagging items in a screen (e.g., jacket 710 of FIG. 14), etc. Media for a product may be added to a media list automatically based on a user's profile. In some circumstances, a media indicator may not be explicitly identified for the user (e.g., if it is embedded in a video). In such circumstances, media indicator data that may be associated with a current screen or product may be used to identify media to be added to a media list.

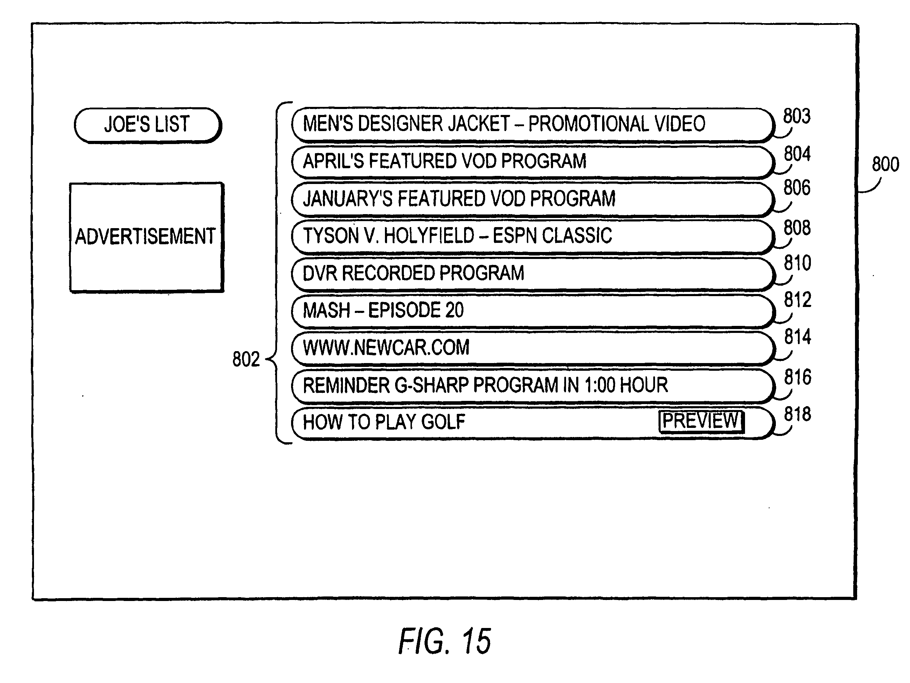

Illustrative displays screen 800 of FIG. 15 may be displayed upon user request after jacket 710 of FIG. 14 is tagged to be added to the current user media list. Display screen 800 may include a media list 802 that may include listings for media that are associated with media indicators and listings from other items that are accessible or presented to users through user equipment. Media list 802 may be a tool for the user in managing different items that are of interest to the user by storing information about the items at a location that a user may return to view and access. Media list 802 may include listings for Web sites, for received e-mails, for television programs, for movies, for video-on-demand programming, for programs that are locally or remotely stored on a digital video recorder, for reminders, for special big events, for season ticket events, for media associated with advertisements, commercials, promotions, or other sales-type presentations, etc. Media list 802 may be considered a master media list that supports not only listings for media for advertisements, trailers, or other promotional materials, but also listings from other interactive televison application features. As shown, listing 803 for a promotional video for jacket 710 of FIG. 14 is included in media list 802. Media list 802 also includes listings 804 and 806 for earlier featured video-on-demand programs. Media list 802 further includes listing 808 for a television program on a cable channel. Media list 802 may also include a listing for a program that was recorded by a local or remote digital video recorder associated with the user (e.g., listing 810). A reminder set by the user, such as reminder listing 816 may also be included in media list 802.

When a user selects an item in media list 802, the guidance application may use information that is stored for that listing to present to the user media that is available for that listing. If desired, an information display screen or overlay may be presented to the user based on a user selecting a listing located in media list 802. The information display screen may provide information such as a description or an explanation related to the listing. The information display screen may include program guide features and other options such as tune, record, remind, parental control, purchase, preview, etc. Information display screens are known to the Applicants. Depending on the circumstances, user equipment may allow a user to add media associated with a media indicator, a product, a program, a reminder, a Web site, etc. in a number of different ways. Techniques for implementing the opportunity for the user to add such media are known to those skilled in the art. For example, a special key may be provided that is dedicated to adding items to a media list or a master media list. A user may navigate a cursor or a highlight window to identify an item of interest and may press the special key to add the item to the media list. Other examples may include an add to list option in an information display screen or a display that permits the user to indicate an interest in adding an item to a media list.

Thus, systems and methods for building a media list are provided. One skilled in the art will realize that the present invention can be practiced by other than the described embodiments, which are presented for purposes of illustration and not of limitation, and that the present invention is limited only by the claims which follow.

## Claims

1. An apparatus comprising user equipment (14), the apparatus further comprising:
means to display one of a number of videos (35) on a display device (13) wherein at least one of the videos includes a scene in which a product (710) is shown that is associated with a particular user-accessible media for that product; the apparatus **characterised by**:
means to provide a user, upon display of the videos, with an opportunity to designate (23) the addition of associated media indicator data to a user built media list (101;
means to store media indicator data associated with the user accessible media;
means to present the user built media list (101) to the user on the display device (13) for selection at a later time upon user invocation (24); and
means to retrieve the user accessible media for an item in the user built media list, utilising media indicator data, upon user selection (26) from the user built media list.

2. The apparatus of claim 1 wherein the user equipment has means for automatically adding a listing (803) based on a user profile when the video including the product is being displayed.

3. The apparatus of claim 1, wherein the user equipment has means for displaying the particular user-accessible media that is associated with the product when the user selects a listing (803) for that particular user-selectable media from the user built media list.

4. The apparatus of claim 1 wherein the user equipment has means for building the user built media list to be a master list of media that is stored for the user for later access by the user, or
wherein the user equipment is to include in the user built media list listings for television programs, or
wherein the user equipment has means configured for including in the user built media list listings for movies, or
wherein the user equipment has means for including in the user built media list listings for video-on-demand programming, or
wherein the user equipment has means for including in the user built media list listings for reminders.

5. A method of operating user equipment, said method comprising:
displaying one of a number of videos (35) on a display device (13)
wherein at least one of the videos includes a scene in which a product (710) is shown that is associated with a particular user-accessible media for that product; the method **characterised by**:
providing a user, upon display of the videos, with an opportunity to designate (23) the addition of associated media indicator data to a user built media list;
storing media indicator data associated with the user accessible media;
presenting the user built media list to the user on the display device for selection at a later time upon user invocation (24); and
retrieving (27) the user accessible media for an item in the user built media list, utilising media indicator data, upon user selection (26) from the user built media list.

6. Computer readable storage media comprising:
instructions for displaying one of a number of videos (35) on a display device (13) wherein at least one of the videos includes a scene in which a product (710) is shown that is associated with a particular user-accessible media for that product; the computer readable storage media **characterised by**:
instructions for providing a user, upon display of the videos, with an opportunity to designate (23) the addition of associated media indicator data to a user built media list;
instructions for storing media indicator data associated with the user accessible media;
instructions for presenting the user built media list to the user on the display device for selection at a later time upon user invocation (24); and
instructions for retrieving (27) the user accessible media for an item in the user built media list, utilising media indicator data, upon user selection (26) from the user built media list.

## Patentansprüche

1. Vorrichtung, die eine Benutzer-Ausstattung (14) aufweist, welche Vorrichtung weiters aufweist:
Mittel zum Anzeigen einer Anzahl von Videos (35) auf einem Anzeigegerät (13) wobei zumindest eines der Videos eine Szene beinhaltet, in der ein Produkt (710) gezeigt wird, welches mit einem besonderen, für den Benutzer zugänglichen, Medium für dieses Produkt in Zusammenhang steht; wobei die Vorrichtung **gekennzeichnet ist durch**:
Mittel um einen Benutzer, bei der Anzeige des Videos, mit einer Möglichkeit auszustatten, um zu bestimmen (23), dass einer vom Benutzer aufgebauten Medienliste (101), begleitende Medien-Hinweis-Daten hinzugefügt werden; Mittel, um Medien-Hinweis-Daten, die mit dem für den Benutzer zugänglichen Medium in Verbindung stehen, zu speichern;
Mittel, um die vom Benutzer aufgebaute Medienliste (101) dem Benutzer auf dem Anzeigegerät (13) für die Auswahl **durch** Benutzeraufruf (24) zu einem späteren Zeitpunkt zu präsentieren; und
Mittel zum Abrufen der für den Benutzer zugänglichen Medien für ein Element in der vom Benutzer aufgebauten Medienliste, unter Verwendung der Medien-Hinweis-Daten, infolge einer Benutzerauswahl (26) aus der vom Benutzer aufgebauten Medienliste.

2. Vorrichtung nach Anspruch 1, wobei die Benutzer-Ausstattung Mittel zum automatischen hinzufügen einer, auf ein Benutzerprofil bezogenen, Auflistung (803), wenn das Video, welches das Produkt beinhaltet, angezeigt wird.

3. Vorrichtung nach Anspruch 1, wobei die Benutzer-Ausstattung Mittel zum Anzeigen des besonderen, für den Benutzer zugänglichen, Mediums, welches mit dem Produkt in Verbindung steht, aufweist, wenn der Benutzer eine Auflistung (803) für das besondere, vom Benutzer auswählbare, Medium von der vom Benutzer aufgebauten Medienliste auswählt.

4. Vorrichtung nach Anspruch 1, wobei die Benutzer-Ausstattung Mittel zum Aufbau der vom Benutzer aufgebauten Medienliste aufweist, so dass sie eine Hauptliste des Mediums, das vom Benutzer für einen späteren Zugriff durch den Benutzer gespeichert ist, darstellt, oder
wobei die Benutzer-Ausstattung gestaltet ist, um Auflistungen für Fernsehprogramme in der vom Benutzer aufgebauten Medienliste zu beinhalten, oder
wobei die Benutzer-Ausstattung Mittel aufweist, die gestaltet sind, um in der vom Benutzer aufgebauten Medienliste Auflistungen von Spielfilmen zu beinhalten, oder
wobei die Benutzer-Ausstattung Mittel aufweist, um in der vom Benutzer aufgebauten Medienliste Auflistungen für eine Programmierung für abrufbare Videos (video-on-demand) zu beinhalten, oder
wobei die Benutzer-Ausstattung Mittel aufweist, um in der vom Benutzer aufgebauten Medienliste Auflistungen für Erinnerungsfunktionen zu beinhalten.

5. Verfahren zum Betrieb einer Benutzer-Ausstattung, welches Verfahren aufweist:
Anzeigen eines von mehreren Videos (35) auf einem Anzeigegerät (13), wobei zumindest eines der Videos eine Szene beinhaltet, in der ein Produkt (710) gezeigt wird, das mit einem besonderen, für den Benutzer zugänglichen Medium für dieses Produkt in Zusammenhang steht; wobei das Verfahren **gekennzeichnet ist durch**:
Ausstatten eines Benutzers mit der Möglichkeit, bei der Anzeige des Videos, zu bestimmen (23), dass einer vom Benutzer aufgebauten Medienliste begleitende Medien-Hinweis-Daten hinzugefügt werden;
Speichern von Medien-Hinweis-Daten, die mit dem, dem Benutzer zugänglichen, Medium in Zusammenhang stehen;
Präsentieren, an einen Benutzer, der vom Benutzer aufgebauten Medienliste auf dem Anzeigegerät für die Auswahl **durch** Benutzeraufruf (24) zu einem späteren Zeitpunkt; und
Abrufen (27) der für den Benutzer zugänglichen Medien für ein Element in der vom Benutzer aufgebauten Medienliste, unter Verwendung der Medien-Hinweis-Daten, infolge einer Benutzerauswahl (26) aus der vom Benutzer aufgebauten Medienliste.

6. Computerlesbares Speichermedium, welches aufweist:
Anweisungen für die Anzeige eines von mehreren Videos (35) auf einem Anzeigegerät (13), wobei zumindest eines der Videos eine Szene beinhaltet, in der ein Produkt (710) gezeigt wird, das mit einem besonderen, für den Benutzer zugänglichen Medium für dieses Produkt in Zusammenhang steht; wobei das Computerlesbare Speichermedium **gekennzeichnet ist durch**:
Anweisungen für das Ausstatten eines Benutzers mit der Möglichkeit, bei der Anzeige des Videos, zu bestimmen (23), dass einer vom Benutzer aufgebauten Medienliste begleitende Medien-Hinweis-Daten hinzugefügt werden;
Anweisungen, für das Speichern von Medien-Hinweis-Daten, die mit dem, dem Benutzer zugänglichen, Medium in Zusammenhang stehen;
Anweisungen, für das Präsentieren der vom Benutzer aufgebaute Medienliste an einen Benutzer auf dem Anzeigegerät für die Auswahl **durch** Benutzeraufruf (24) zu einem späteren Zeitpunkt; und
Anweisungen für das Abrufen (27) der für den Benutzer zugänglichen Medien für ein Element in der vom Benutzer aufgebauten Medienliste, unter Verwendung der Medien-Hinweis-Daten, infolge einer Benutzerauswahl (26) aus der vom Benutzer aufgebauten Medienliste.

## Revendications

1. Appareil comprenant un équipement d'utilisateur (14), l'appareil comprenant en outre:
des moyens pour afficher une parmi un certain nombre de vidéos (35) sur un dispositif d'affichage (13), au moins une des vidéos comprenant une scène dans laquelle un produit (710) est présenté associé à un média particulier accessible par l'utilisateur pour ce produit, l'appareil étant **caractérisé par**:
des moyens pour fournir à un utilisateur, lors de l'affichage des vidéos, la possibilité de désigner (23) l'ajout de données d'indicateur de média associées à une liste de médias établie par l'utilisateur (101);
des moyens pour stocker des données d'indicateur de média associées au média accessible par l'utilisateur;
des moyens pour présenter à l'utilisateur la liste de médias établie par l'utilisateur (101) sur le dispositif d'affichage (13) pour permettre une sélection ultérieure lors d'une demande (24) de l'utilisateur; et
des moyens pour récupérer le média accessible par l'utilisateur pour un article dans la liste de médias établie par l'utilisateur, en utilisant des données d'indicateur de média, lors de la sélection (26) par l'utilisateur dans la liste de médias établie par l'utilisateur.

2. Appareil selon la revendication 1, dans lequel l'équipement d'utilisateur comprend des moyens pour ajouter automatiquement une liste (803) basée sur un profil d'utilisateur lorsque la vidéo contenant le produit est affichée.

3. Appareil selon la revendication 1, dans lequel l'équipement d'utilisateur comprend des moyens pour afficher le média particulier accessible par l'utilisateur qui est associé au produit lorsque l'utilisateur sélectionne une liste (803) pour ce média particulier sélectionnable par l'utilisateur dans la liste de médias établie par l'utilisateur.

4. Appareil selon la revendication 1, dans lequel l'équipement d'utilisateur comprend des moyens pour définir la liste de médias établie par l'utilisateur comme étant une liste de médias principale qui est stockée pour l'utilisateur en vue d'un accès ultérieur de l'utilisateur à celle-ci, ou
dans lequel l'équipement d'utilisateur sert à inclure des listes de programmes de télévision dans la liste de médias établie par l'utilisateur, ou
dans lequel l'équipement d'utilisateur comprend des moyens configurés pour inclure des listes de films dans la liste de médias établie par l'utilisateur, ou
dans lequel l'équipement d'utilisateur comprend des moyens pour inclure des listes de programmes vidéo à la demande dans la liste de médias établie par l'utilisateur, ou
dans lequel l'équipement d'utilisateur comprend des moyens pour inclure des listes de rappels dans la liste de médias établie par l'utilisateur.

5. Procédé pour faire fonctionner un équipement d'utilisateur, ledit procédé comprenant:
l'affichage d'une parmi un certain nombre de vidéos (35) sur un dispositif d'affichage (13), au moins une des vidéos comprenant une scène dans laquelle un produit (710) est présenté associé à un média particulier accessible par l'utilisateur pour ce produit, le procédé'étant **caractérisé par**:
la fourniture à un utilisateur, lors de l'affichage des vidéos, de la possibilité de désigner (23) l'ajout de données d'indicateur de média associées à une liste de médias établie par l'utilisateur;
le stockage de données d'indicateur de média associées au média accessible par l'utilisateur;
la présentation à l'utilisateur de la liste de médias établie par l'utilisateur sur le dispositif d'affichage pour permettre une sélection ultérieure lors d'une demande (24) de l'utilisateur; et
la récupération (27) du média accessible par l'utilisateur pour un article dans la liste de médias établie par l'utilisateur, en utilisant des données d'indicateur de média, lors de la sélection (26) par l'utilisateur dans la liste de médias établie par l'utilisateur.

6. Support de stockage lisible par un ordinateur, comprenant:
des instructions pour afficher une parmi un certain nombre de vidéos (35) sur un dispositif d'affichage (13), au moins une des vidéos comprenant une scène dans laquelle un produit (710) est présenté associé à un média particulier accessible par l'utilisateur pour ce produit, le support de stockage lisible par un ordinateur étant **caractérisé par**:
des instructions pour fournir à un utilisateur, lors de l'affichage des vidéos, la possibilité de désigner (23) l'ajout de données d'indicateur de média associées à une liste de médias établie par l'utilisateur;
des instructions pour stocker des données d'indicateur de média associées au média accessible par l'utilisateur;
des instructions pour présenter à l'utilisateur la liste de médias établie par l'utilisateur sur le dispositif d'affichage pour permettre une sélection ultérieure lors d'une demande (24) de l'utilisateur; et
des instructions pour récupérer (27) le média accessible par l'utilisateur pour un article dans la liste de médias établie par l'utilisateur, en utilisant des données d'indicateur de média, lors de la sélection (26) par l'utilisateur dans la liste de médias établie par l'utilisateur.
